# EUROPEAN PATENT APPLICATION

(11) **EP 2 631 890 A2**
(43) Date of publication of application: **28.08.2013**
(21) Application number: 13156562.4
(22) Date of filing: 25.02.2013
(51) Int. Cl.: G08G 5/00

(54) **Methods for in-flight adjusting of a flight plan**

(30) Priority: 27.02.2012 US 201213405685
(71) Applicant: GE Aviation Systems LLC, Grand Rapids, MI 49512-1991 (US)
(72) Inventor: Bollapragada, Srinivas, Niskayuna, NY New York 12309 (US); Klooster, Joel Kenneth, Grand Rapids, MI Michigan 49512 (US)
(74) Representative: Williams, Andrew Richard

(57) **Abstract**

A method (100) of in-flight adjusting a flight plan of an aircraft to provide a low cost flight based on predicting a trajectory (102) for the completion of the flight based on at least the current state data of the aircraft along the flight plan, performance data for the aircraft, and the flight plan data, and computing the cost of completing the flight plan (104).

## Description

### BACKGROUND OF THE INVENTION

Contemporary aircraft include flight management systems (FMS) to implement a flight plan, which may consider a variety of factors and data that may be uploaded to the FMS from a ground station via a communications system while the aircraft is in flight or input by the pilot. The FMS may generate the flight plan by taking into account parameters specific to the aircraft and to the flight conditions such as the payload, the weight of the aircraft, the quantity of fuel onboard, temperature, wind, altitude, etc., and of the time constraints imposed by the air traffic control. The flight plan may describe all the waypoints or positions through which the aircraft is to pass, with the altitude and corresponding speed at each waypoint. Recently FMS have also been configured to take into account economic criteria; however, these systems only take into account the relative weighting of the cost of fuel to time-related costs such as labor or crew costs when developing a flight plan.

### BRIEF DESCRIPTION OF THE INVENTION

In one aspect, a method is provided of in-flight adjusting a flight plan of an aircraft to provide a low cost flight includes predicting a trajectory for completion of the flight based on at least current state data of the aircraft along the flight plan, performance data for the aircraft, and flight plan data, computing the cost of completing the flight plan, varying at least one of the current state data, performance data, and flight plan data to define a set of acceptable predicted trajectories and corresponding costs, and selecting a cost trajectory from the set of acceptable predicted trajectories and flying the aircraft along the selected trajectory.

In another aspect, a method is provided of in-flight adjusting a flight plan of an aircraft to provide a low cost flight includes a) predicting a trajectory for completion of the flight based on at least current state data of the aircraft along the flight plan, performance data for the aircraft, and flight plan data, b) computing the cost of completing the flight plan by flying the aircraft along the predicted trajectory, c) applying a constraint, including at least one of a scheduling constraint and a cost constraint, to the predicted trajectory, d) accepting the predicted trajectory if it satisfies the constraint, e) varying at least one of the current state data, performance data, and flight plan data and repeating steps a-d to define a set of acceptable predicted trajectories and corresponding costs and where the number of repetitions of steps a-d is limited by at least one of time or iterations, f) selecting a lowest cost trajectory from the set of acceptable predicted trajectories and updating the flight plan data according to the selected trajectory, and g) flying the aircraft along the selected trajectory.

### BRIEF DESCRIPTION OF THE DRAWINGS

In the drawings:
Figure 1 is a schematic graphical illustration of a flight path for an aircraft including a flight path according to an embodiment of the invention;
Figure 2 is a flowchart showing a method of in-flight adjusting a flight plan of an aircraft according to an embodiment of the invention; and
Figure 3 is a flowchart showing a method of in-flight adjusting a flight plan of an aircraft according to another embodiment of the invention.

### DESCRIPTION OF EMBODIMENTS OF THE INVENTION

A flight path for an aircraft generally includes a climb, a cruise, and a descent. Most contemporary aircraft include a FMS for generating a flight path trajectory 10 and flying the aircraft along the flight path trajectory 10. The FMS may automatically generate the flight path trajectory 10 for the aircraft based on commands, waypoint data, and additional information such as weather data all of which may be received from an airline operations center, air traffic control, or from the pilot. Such information may be manually entered or sent to the aircraft using a communication link. The communication link may be any variety of communication mechanisms including but not limited to packet radio and satellite uplink. By way of non-limiting example, the Aircraft Communications Addressing and Reporting System (ACARS) is a digital datalink system for transmission messages between aircraft and ground stations via radio or satellite. The information may also be input by the pilot.

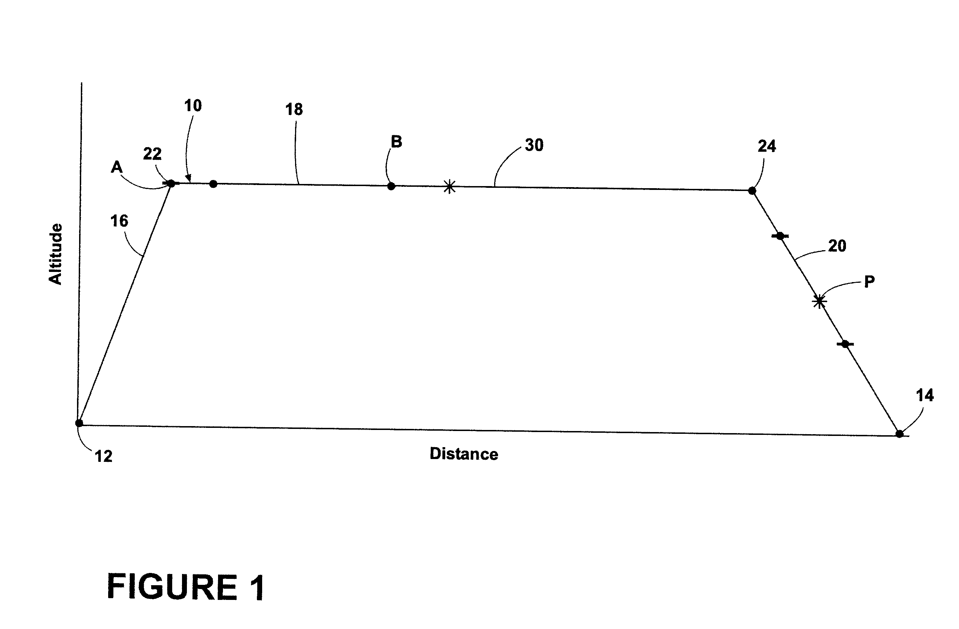

Figure 1 is a schematic illustration of a flight path for an aircraft in the form of an aircraft trajectory 10. The trajectory begins at a start point 12, such as the departure airport, and ends at an end point 14, such as a destination airport. Traversing between the start point 12 and end point 14 includes a climb phase 16, a cruise phase 18, and a descent phase 20, which are all included in the trajectory 10.

The climb, cruise and descent phases 16, 18, and 20 are normally input into a FMS or predicted by the FMS according to inputs such as preferred speeds, cruise altitudes, and routing in accordance with the aircraft performance. This prediction creates a trajectory that passes through specified data points. For purposes of this description, the term data point may include any type of data point including waypoints, enroute waypoints, and altitudes and is not limited to a specific geographic position. For example, the data point may just be an altitude or it may be a specific geographic location, which may be represented by any coordinate system, such as longitude and latitude. By way of non-limiting example, a data point may be 3-D or 4-D; a four dimensional description of the aircraft trajectory 10 defines where in 3D space the aircraft is at any given point of time. Each of the data points may include associated information, such as weather data that may include temperature data and wind data, with or without wind direction.

For the climb, a data point corresponding to the altitude A at the top of the climb 22 may be predicted based on a computed or assumed rate of climb; for the cruise phase 18, en route waypoints B may be input; and for the descent phase 20 various altitudes may be input as constraints that the flight trajectory must pass through. After takeoff, an aircraft typically remains in the climb phase 16 up to the top of climb 22 and then it follows the enroute waypoints during the cruise phase 18 to the top of the descent 24 where it then starts the descent phase 20. The altitudes A in the climb phase 16 and the descent phase 20 are computed or virtual waypoints in the sense that the aircraft is achieving its trajectory 10 to such altitudes during these phases. The enroute waypoints B may be selected based upon the location of ground navigation aids (Navaids) along the trajectory 10 of the aircraft. Pseudo-waypoints P may also be included in the trajectory 10 and are artificial reference points created for some purpose relevant to a parameter of the trajectory 10 and are not limited to ground navigation aids. They can be defined prior to or after established data points for the trajectory have been set. Pseudo-waypoints can be defined in various ways, such as by latitude and longitude or by a specified distance along the current trajectory, such as an along-track waypoint.

For convenience of illustration, the flight plan is illustrated as straight lines for each of the phases, when in reality, this will not be the case. For example, during the cruise phase 18 there may be some changes in altitude especially for transcontinental flights where an aircraft may change its elevation to take advantage of or minimize the impact of prevailing winds, such as the jet stream, to climb to higher altitudes as fuel is burned, or to avoid turbulence. A FMS may only allow for one wind level, which prevents onboard calculation of wind-optimal cruise altitude or an optimal step climb point based on winds and weight and results in a constant altitude cruise or cruise altitude changes that do not take full advantage of the wind and temperature. Some long-range aircraft may take winds at up to 5 flight levels at each waypoint, allowing a computation of the wind optimal cruise altitude and a single location to optimize a cruise step to a higher cruise level. A change in altitude during the cruise phase 18 using a constant thrust setting on the auto-throttle may create a cruise-climb where the cruising trajectory would not be at a fixed altitude, but would vary as ambient wind and temperature conditions change, impacting that actual thrust achieved.

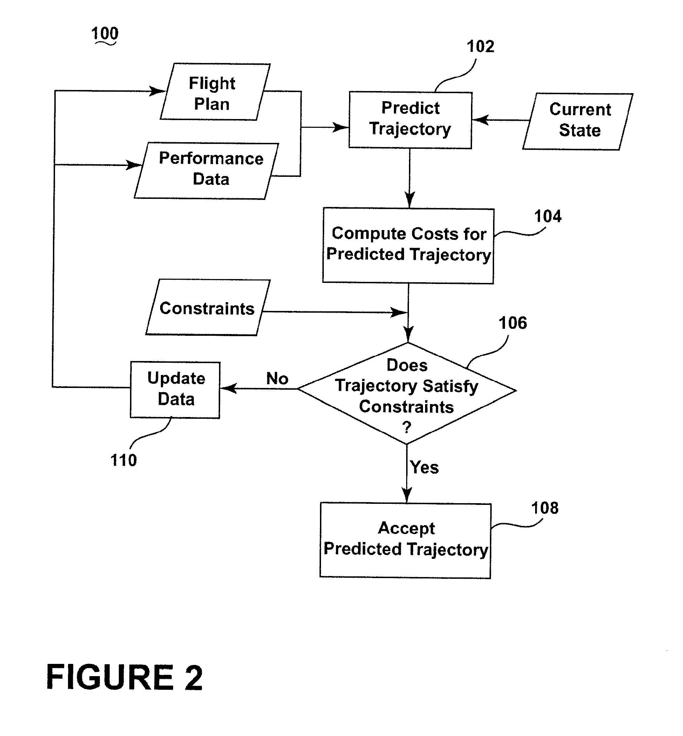

An embodiment of the invention includes a method of in-flight adjusting of a flight plan of an aircraft to provide a low cost flight. In accordance with an embodiment of the invention, Figure 2 illustrates a method 100, which may be used for in-flight adjusting of the flight plan of an aircraft according to a predetermined guideline, which in the embodiment is illustrated as providing a low cost flight.

The method 100 begins at 102 by predicting a trajectory for the completion of the flight of a specified aircraft. Such a prediction may be based on at least the current state data, performance data for the aircraft, and the flight plan data. Current state data may include information pertaining to the aircraft along the flight plan and may include a current operational state of the aircraft and/or a current positional state of the aircraft. For example, the current state data may include aircraft position data and may include at least one of latitude, longitude, altitude, flight phase, and location on the flight plan. The location on the flight plan may include the location relative to a waypoint of the flight plan. Current state data of the aircraft along the flight plan may also include time information, fuel information, and speed of the aircraft.

Performance data for the aircraft may be aircraft specific data related to the flight, such as cost index, airframe engine combination, weight, and unique tail number. The weight information may be any of a gross weight, zero fuel weight, and fuel on board weight. The unique tail number may be correlated to fuel flow, thrust, drag, and an operating envelope of the aircraft. Performance data may also include air speed, altitude, throttle setting, cruise speed, cost index, fuel consumption rate, drag, and operating envelope.

The performance data may also include meteorological data including current weather conditions. This could be accessed directly from a weather grid source such as the National Oceanic and Atmospheric Association Rapid Update Cycle Gridded Binary. Such meteorological data may contain real-time meteorological data or forecasted meteorological data. Such meteorological data may include data regarding certain weather-related phenomena (e.g., wind speed, wind direction, temperature, among others) and data pertaining to visibility (e.g., foggy, cloudy, etc.), precipitation (rain, hail, snow, freezing rain, etc.) and other meteorological information such as convective weather cells or turbulence. Because air temperature and wind must be accounted for in trajectory calculations to ensure that the aircraft can accurately conform to the desired trajectory, the meteorological data may include 3-D real-time temperature and wind models of the local airspace as well as 4-D forecasted data. The weather database may store such real-time or forecasted meteorological data at a specific latitude, longitude, and altitude.

The flight plan data may specify the route the aircraft should follow such as a company route or a custom route. The flight plan data may include at least one of departure airport, arrival airport, time of departure, estimated time of arrival, gate arrival time, enroute waypoints, airways, waypoint wind data, and waypoint temperature data. This data may include a navigation database, which may provide supplementary information regarding the flight plan data, such as latitude and longitude or any speed or altitude constraint. The navigation database may contain information such as whether the waypoint must be crossed at a specified speed or altitude, whether the waypoints are in en route or terminal airspace, information on how to transition from one waypoint to another, runway length and heading, and information on the airspace structure, such as the boundary of different sectors, or the definition of the terminal airspace shape around an airport. The flight plan data may be input in a standardized format, such as a flight plan string in ICAO format.

This information is then used to predict the trajectory for the remainder of the flight of the aircraft. The trajectory prediction at 102 may take into consideration a variety of the information listed above. The more information included and the more accurate the information the more accurate the prediction of the trajectory.

At 104, the cost of completing the flight plan by flying the aircraft along the predicted trajectory may be computed. Such a computation may include operating costs and schedule costs. Operating costs may include such things as the cost of fuel to operate the flight, labor costs, and other time-based operating costs. Additional time-based operating costs may include things such as engine depreciation or other indirect operating costs.

Schedule related costs may take into account the cost associated with the schedule, which may include things such as the cost of deviating from a defined schedule, whether overtime costs apply beyond a certain time, whether additional ground crew or gate agents will be required before or after a specified time block, or whether compensation for missed passenger connections will be required beyond certain times. It is contemplated that these costs may also be tiered; for example, a missed first class passenger connection to an international flight may be more costly than a domestic economy class missed connection. In this manner, schedule information such as passenger connection times, crew connection times, earliest gate availability time, scheduled arrival time, scheduled departure time, and actual departure time may be considered and various costs may be associated therewith.

The schedule-related costs may be complex, non-linear, and important in determining the cost of flying the associated trajectory. Examples may include that if a first subset of passengers will miss a connection, the cost is C1. If a larger group of passengers will miss a connection, the cost is C2. If an even larger number of passengers will miss a connection, the cost is C3. If the crew will miss a connection or the next aircraft will be held for the crew, the cost is C4. If the crew will violate maximum hours worked, the cost is C5. If the aircraft will be between 1 and 14 minutes late, the cost is C6. If the aircraft will be more than 14 minutes late, the cost is C7. The cost C7 may be significantly higher than the cost C6 because the FAA on-time statistics are with respect to being 15 minutes or more late, thus the corresponding cost may increase at that point. The schedule-related costs may also be taken into account via a mechanism such as a penalty factor. For example, the aircraft should not arrive before the earliest gate availability, or should at least be penalized in the cost computation for getting there too early. Alternatively, only constraints may be used to constrain the solution. The method 100 may be capable of outputting the cost of the current specified predicted trajectory in dollars or some other normalized unit.

After computing the costs at 104, one or more constraints may be applied to the predicted trajectory. Such constraints may include at least one of a scheduling constraint and a cost constraint. Scheduling constraints may include arrival gate availability and flight crew availability. More specifically, the constraints may include whether the arrival gate will not be available for a certain period, whether the legal flying time of the flight crew will be exceeded by the predicted trajectory, allowable flight levels, maximum deviation from current flight level, time that a given airspace will be unavailable, min/max speeds, maximum deviation from current speed, time an airport will be closed (e.g. due to noise curfews), time a runway will be closed (e.g. for snow clearing), fuel weight constraints, etc. Cost constraints may include fuel costs and crew costs. If the predicted trajectory satisfies these constraints, then it may be accepted at 108. If the predicted trajectory does not satisfy the constraints, then the flight plan and performance data may be updated at 110 and the method may continue at 102 where a trajectory is predicted based on the updated data.

It is contemplated that a number of acceptable predicted trajectories may be determined in this manner. More specifically, a set of acceptable predicted trajectories and corresponding costs may be defined by varying at least one of the current state data, performance data, and flight plan data and repeating the method 100. One of the cost trajectories may then be selected from the set of acceptable predicted trajectories and the flight plan data may be updated according to the selected trajectory and the aircraft may be flown along the selected trajectory accordingly.

It will be understood that the method of in-flight adjusting is flexible and the method illustrated is merely for illustrative purposes. For example, the sequence of steps depicted is for illustrative purposes only, and is not meant to limit the method 100 in any way as it is understood that the steps may proceed in a different logical order or additional or intervening steps may be included without detracting from the invention. For example, a ranked set of alternative trajectories with related cost information may be presented to a dispatcher to make the decision regarding what trajectory to select. Further, a breakdown of costs may be presented so a dispatcher may understand the implications of choosing one flight modification over another.

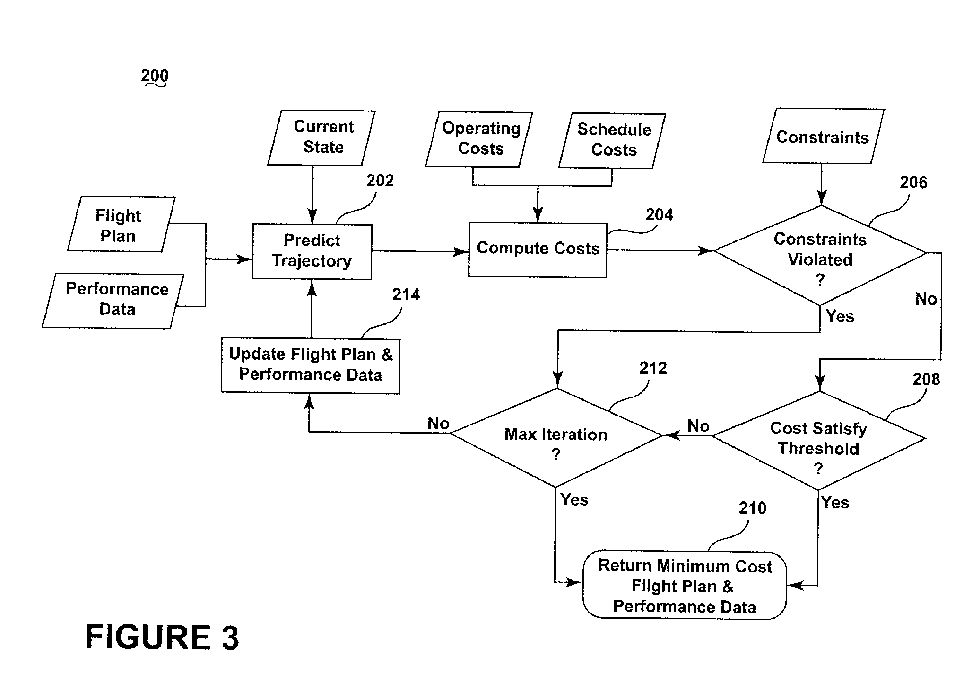

Figure 3 illustrates a second embodiment of a method of in-flight adjusting of a flight plan of an aircraft to provide a low cost flight according to an embodiment of the invention. The second embodiment is similar to the first embodiment and it may be understood that the description of the like parts of the first embodiment applies to the second embodiment, unless otherwise noted. It will be understood that the method 200 of in-flight adjusting is merely for illustrative purposes. The sequence of steps depicted is for illustrative purposes only, and is not meant to limit the method 200 in any way as it is understood that the steps may proceed in a different logical order or additional or intervening steps may be included without detracting from the invention.

As with the first embodiment, the trajectory is predicted at 202, the costs for the predicted trajectory are computed at 204, and it is determined if the trajectory satisfies constraints at 206. If the predicted trajectory satisfies these constraints, then the method may move on to 208 where it may be determined if the cost computed at 204 satisfies a cost threshold. If the predicted trajectory does not satisfy the constraints, then the method may move on to determining if the maximum iterations have been reached at 212.

At 208, it may be determined if the cost computed at 204 satisfies a cost threshold. To do this, the cost computed at 204 may be compared to a predetermined cost threshold value. The term "satisfies" the threshold is used herein to mean that the cost computed at 204 satisfies the predetermined threshold, such as being equal to or less than the threshold value. It will be understood that such a determination may easily be altered to be satisfied by a positive/negative comparison or a true/false comparison. The predetermined cost threshold value may set by airline control or the pilot as the cost acceptable for flying the remainder of the flight or the total cost for flying the flight. It has been contemplated that the predetermined cost threshold value may be a predetermined range of costs and that the predetermined cost threshold may be satisfied when the cost computed at 204 falls within the predetermined cost range. It has been contemplated that there may be multiple predetermined cost threshold values and that during the comparison, it may be determined which of the multiple cost threshold values is satisfied.

If it is determined that that cost computed at 204 satisfies the cost threshold, then the flight plan and performance data may be returned as an acceptable option at 210. It is contemplated that predicting the trajectory, computing the costs for the predicted trajectory, and determining if the trajectory satisfies constraints may be repeated to find a low cost option. The number of repetitions of steps a-d may be limited by the number of iterations. Thus, if the predicted trajectory does not satisfy the constraints at 206, or the cost computed at 204 does not satisfy the cost threshold at 208, then the method may move on to determining if the maximum iterations have been reached at 212. For example, it is possible that no combination of flight parameters honors all constraints within a desired cost threshold. In this case, an infinite loop situation must be avoided. If at 212 it is determined that a specified maximum number of iterations has been exceeded, then the flight plan and performance data may be returned as an acceptable option at 210. If a specified maximum number of iterations has not been exceeded, the flight plan and performance data may be updated at 214 and the method may continue at 202 where a trajectory is predicted based on the updated data.

Alternatively, it has been determined that predicting the trajectory, computing the costs for the predicted trajectory, determining if the trajectory satisfies constraints and accepting the predicted trajectory may be limited by time instead of iterations. For example, the method 200 may have a target response time and if the target response time has not been exceeded then the method 200 may continue to iterate.

At 214, the data may be updated to reflect the movement of the aircraft during the flight. At least one of the current state data and the performance data may be updated for each iteration. It is also contemplated that an optimization function may be used to determine new flight plan and performance data to be used in predicting the trajectory. In this manner, the method 200 may be used to determine a set of predicted trajectories having the lowest cost and the highest cruise altitude or the best altitude and location to change altitudes during a cruise-climb. A user may input which of these should be included in computing the set of acceptable trajectories and the set of acceptable predicted trajectories may be selected to find a combination of these, as specified by the user. It is also contemplated that an output of the method may include the low cost trajectory information as well as the, cost index, cruise altitude, and cruise-climb step altitudes and locations, if such information is applicable.

It is contemplated that the method 200 may be capable of outputting a number of low cost trajectories. More specifically, a set of acceptable predicted trajectories and corresponding costs may be defined by varying at least one of the current state data, performance data, and flight plan data and repeating the method 200. For example, the method 200 may output the five lowest cost alternatives, along with the cost and the savings relative to the currently planned flight. One of the cost trajectories may then be selected from the set of acceptable predicted trajectories and the flight plan data may be updated according to the selected trajectory and the aircraft may be flown along the selected trajectory accordingly. The selected trajectory may correlate to the lowest cost trajectory or may be selected in another manner such as an optimization of the highest cruise altitude or cruise step altitudes and locations. The determining a low cost trajectory and flying the aircraft according to the same may be repeated multiple times during the flight. For example, it may be continuously repeated during the flight such that the aircraft is always being flown in a low cost manner.

For the above embodiments, it is contemplated that computing such low cost trajectories may be determined on the ground by a suitable computer or processor and provided to the aircraft via a communication system, such as a wireless communication system. Alternatively, the determination of such low cost trajectories may be done by a computer, processor, or the FMS onboard the aircraft itself. It is contemplated that the determination of the low cost trajectories may be done on a processor connected to other systems such as a flight planning system, crew and passenger scheduling systems, and weather forecasting system such that much of the inputs may come directly from such sources rather than direct operator input. It is also contemplated that a user may directly interact with the process to specify or modify inputs such that various outputs may be displayed in near real-time or that the trajectories may be optimized according to various inputs.

An advantageous effect of the above embodiments is that during the flight the trajectory and flight plan of the aircraft may be updated based on cost information as well as other various constraints and inputs to minimize the cost of the flight. The above embodiments provide a variety of benefits including the ability to manage the flight of an aircraft to fly along a trajectory having a corresponding low cost based on a variety of constraints. This may allow for overall cost savings in a flight as well as allowing an airline to manage its fleet more effectively. The above described embodiments may be used during flight to minimize the cost of disturbances such as weather of air traffic congestion.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of in-flight adjusting a flight plan of an aircraft to provide a low cost flight, the method comprising:
a) predicting (102,202) a trajectory for completion of the flight based on at least current state data of the aircraft along the flight plan, performance data for the aircraft, and flight plan data;
b) computing (104,204) the cost of completing the flight plan along the predicted trajectory;
c) applying a constraint, including at least one of a scheduling constraint and a cost constraint, to the predicted trajectory;
d) accepting (108,208) the predicted trajectory if it satisfies the constraint;
e) varying at least one of the current state data, performance data, and flight plan data and repeating steps a-d to define a set of acceptable predicted trajectories and corresponding costs;
f) selecting a cost trajectory from the set of acceptable predicted trajectories and updating the flight plan data according to the selected trajectory; and
g) flying the aircraft along the selected trajectory.

2. The method (100,200) of claim 1, wherein steps a-g are repeated multiple times during the flight.

3. The method of claim 2, wherein steps a-g are continuously repeated during the flight.

4. The method of either of claim 1 or 2, wherein the number of repetitions of steps a-d is limited by at least one of time or iterations.

5. The method of any preceding claim, wherein at least one of the current state data and the performance data (214) is updated during the repeating of steps a-d to reflect movement of the aircraft during the flight.

6. The method of claim 5, wherein the at least one of the current state data and the performance data (214) is updated for each iteration of the predicted trajectory.

7. The method of any preceding claim, wherein the current state data comprises aircraft position data.

8. The method of claim 7, wherein the aircraft position data comprises at least one of latitude, longitude, altitude, flight phase, and location on the flight plan.

9. The method of claim 8, wherein the location on the flight plan comprises location relative to a waypoint of the flight plan.

10. The method of any preceding claim, wherein the performance data comprises at least one of air speed, altitude, throttle setting, cruise speed, cost index, gross weight, zero fuel weight, fuel on board weight, tail number, fuel consumption rate, drag, and operating envelope, and current weather conditions.

11. The method of any preceding claim, wherein the flight plan data comprises at least one of departure airport, arrival airport, time of departure, estimated time of arrival, gate arrival time, enroute waypoints, airways, waypoint wind data, and waypoint temperature data.

12. The method of any preceding claim, wherein the applying the constraint comprises applying both the scheduling constraint and the cost constraint.

13. The method of any preceding claim, wherein the scheduling constraint comprises at least one of arrival gate availability and flight crew availability.

14. The method of any preceding claim, wherein the cost constraint comprises at least one of fuel costs and crew costs.

15. The method of claim 1, wherein the number of repetitions of steps a-d is limited by at least one of time or iterations.
